# FASCICULE DE BREVET EUROPEEN

(11) **EP 3 220 471 B1**
(45) Date de publication et mention de la délivrance du brevet: **31.10.2018**
(21) Numéro de dépôt: 17161451.4
(22) Date de dépôt: 16.03.2017
(51) Int. Cl.: H01M 10/44, H01M 10/46, H01M 10/48, E06B 9/68, H02J 7/35, H02J 7/00, H01M 10/0525

(54) **PROCÉDÉ DE CHARGE D'UNE BATTERIE D'ACCUMULATEURS ÉLECTROCHIMIQUES ET DISPOSITIF DE PILOTAGE DE LA CHARGE**
VERFAHREN ZUM LADEN EINER BATTERIE VON ELEKTROCHEMISCHEN AKKUMULATOREN UND VORRICHTUNG ZUR KONTROLLE DES LADEVORGANGS
METHOD OF CHARGING A BATTERY OF ELECTROCHEMICAL ACCUMULATORS AND DEVICE FOR CONTROLLING THE CHARGING

(30) Priorité: 18.03.2016 FR 1652325
(43) Date de publication de la demande: 20.09.2017
(73) Titulaire: Commissariat à l'Energie Atomique et aux Energies Alternatives, 75015 Paris (FR); BUBENDORFF Société Anonyme, 68220 Attenschwiller (FR)
(72) Inventeur: KLEIN, Jean-Marie, 73420 VIVIERS DU LAC (FR); DESMOULIERE, Jean-Baptiste, 73230 SAINT-JEAN-D'ARVEY (FR); ZARA, Henri, 73370 LE BOURGET DU LAC (FR)
(74) Mandataire: Cabinet Beaumont

(56) Documents cités:
- WO-A1-2013/186319
- DE-A1- 19 913 627
- US-A- 5 945 805

## Description

### Domaine technique de l'invention

L'invention concerne un procédé de charge d'une batterie à accumulateurs électrochimiques, notamment une batterie lithium, et un dispositif de pilotage de la charge de la batterie. Elle concerne aussi une application particulière d'un tel dispositif de pilotage de la charge à un système de commande d'un élément mobile de fermeture, d'occultation, de protection solaire ou d'écran.

### Etat de la technique

Le vieillissement d'une batterie lithium, ou plus généralement d'une batterie d'accumulateurs électrochimiques, est fortement accéléré lorsque la batterie est totalement ou quasi-totalement chargée, même en dehors de toute utilisation de la batterie. Afin de ralentir ce vieillissement et donc augmenter la durée de vie de la batterie, une solution consiste à ne pas charger pleinement la batterie et à arrêter la charge lorsque la batterie a atteint un état de charge, ou SOC (State of Charge), cible strictement inférieur à 100%.

Il existe différentes méthodes connues pour arrêter la charge d'une batterie à un état de charge cible ou souhaité.

Une première méthode, décrite dans le document WO2011051575, consiste à arrêter la charge lorsque la tension de la batterie atteint une tension seuil de fin de charge prédéfinie qui dépend du courant et de la température de charge. Elle utilise des cartographies de la tension de la batterie en fonction du courant et de la température, stockées en mémoire, et nécessite des mesures de températures et de courants. Une telle méthode présente plusieurs inconvénients :
- elle requiert une capacité de stockage importante et des moyens de traitement ;
- elle nécessite une adaptation régulière des cartographies pour tenir compte du vieillissement de la batterie.

Une deuxième méthode connue repose sur le comptage coulométrique. Le courant de charge de la batterie est mesuré et intégré dans le temps à l'aide de moyens logiciels et/ou matériels. La température et le régime de charge ayant une influence sur le traitement et l'état de charge issu du comptage de coulombs, cette méthode utilise également des cartographies pour prendre en compte ces influences. Une telle solution est coûteuse en matériel et en emplacement mémoire. En revanche, elle ne nécessite pas de modifier au cours de la vie de la batterie les cartographies qui sont indépendantes du vieillissement de la celle-ci.

Par ailleurs, le document US5945805 décrit une méthode de contrôle de la charge d'une batterie, le document DE19913627 décrit un procédé de charge d'un accumulateur à l'aide d'une source d'alimentation qui peut être un module solaire, et le document WO2013/186319 décrit un système domotique de manoeuvre d'un écran mobile comprenant un accumulateur rechargé à l'aide d'un panneau photovoltaïque.

Les méthodes connues nécessitent de nombreuses mesures (courant, température) et d'importantes ressources en mémoire et en traitement et/ou calcul. Or, pour certaines applications, on peut souhaiter mettre en oeuvre une méthode plus simple et plus économique en capacité de stockage, en puissance de calcul et/ou en mesures.

La présente invention vient améliorer la situation.

### Objet de l'invention

A cet effet, l'invention selon la revendication concerne un procédé de charge d'une batterie d'accumulateurs électrochimiques, notamment une batterie lithium, à l'aide d'une source d'alimentation, qui comprend
- une étape de charge de la batterie par connexion à la source d'alimentation ;
- une première étape de mesure d'une tension de la batterie en charge ;
- un premier test permettant de détecter si la tension mesurée de la batterie en charge est égale ou supérieure à une tension cible qui est égale à une tension en circuit ouvert de la batterie à un état de charge cible souhaité ;
- si le premier test est positif, une étape de pause, ayant une durée prédéfinie, durant laquelle la batterie est déconnectée de la source d'alimentation et au repos ;
- une deuxième étape de mesure de la tension de la batterie en fin de pause ;
- un deuxième test consistant à vérifier si la tension de la batterie mesurée en fin de pause satisfait un critère de fin de charge relatif à la tension cible ;
- si le deuxième test est positif, le procédé de charge est arrêté ;
- si le deuxième test est négatif, l'étape de charge est réitérée.

Avantageusement, tant que le premier test est négatif, autrement dit tant que la tension de la batterie en charge est strictement inférieure à la tension cible, les étapes de charge et de mesure sont exécutées.

L'invention permet de charger la batterie jusqu'à un état de charge égal ou sensiblement égal à un état de charge cible souhaité, en procédant uniquement à des mesures de la tension de la batterie. Elle ne nécessite pas de ressources de traitement et de calcul importantes. Généralement, le critère de fin de charge relatif à la tension cible est atteint progressivement par une succession de charges et de pauses alternées, la tension de la batterie après la pause, et donc après relaxation, se rapprochant petit à petit de la tension cible.

Dans un premier mode de réalisation, qui n'appartient pas à l'invention, lors du premier test, on détecte lorsque ladite tension de la batterie en charge atteint ladite tension cible, et en ce que le critère de fin de charge est que l'écart entre la tension cible et la tension mesurée de la batterie en fin de pause doit être inférieur ou égal à un écart limite prédéfini.

Dans ce premier mode de réalisation, dès qu'il est détecté pendant la charge que la tension de la batterie a atteint la tension cible, on déclenche une pause et, après la pause, on teste de nouveau la tension de la batterie, diminuée du fait du phénomène de relaxation. Si l'écart entre la tension de la batterie après la pause et la tension cible est suffisamment faible (c'est-à-dire inférieur à l'écart limite fixé), la charge est arrêtée car il est estimé que l'état de charge de la batterie est alors égal ou très proche (par exemple à 10% près) de l'état de charge cible souhaité. Si l'écart entre la tension de la batterie après la pause et la tension cible est trop important (c'est-à-dire supérieur à l'écart limite fixé), la charge est reprise de la même manière que précédemment, c'est-à-dire avec une interruption momentanée de la charge pour réaliser une pause dès que la tension de la batterie atteint de nouveau la tension cible puis, après la pause, la réalisation d'un test pour vérifier si l'écart limite entre la tension de la batterie après la pause et la tension cible est suffisamment faible.

Avantageusement, la première étape de mesure comprend une succession de mesures réalisées concomitamment à l'étape de charge, avec une fréquence d'échantillonnage d'au moins un échantillon par minute. Grâce à cela, on détecte avec une précision souhaitée le moment où la tension de la batterie atteint la tension cible (ou une tension sensiblement égale à la tension cible).

Ledit écart limite est avantageusement inférieur ou égal à 10% de la tension cible, avantageusement encore inférieure ou égal à 5%.

La durée de l'étape de pause est avantageusement :
- supérieure à trois minutes, avantageusement égale ou supérieure à cinq minutes ;
- inférieure ou égale à 20 minutes, de préférence inférieure ou égale à 15 minutes et encore avantageusement inférieure ou égale à 10 minutes.

Dans un deuxième mode de réalisation, la première étape de mesure de la tension de la batterie en charge réalise des mesures espacées, séparées par un intervalle de temps fixé supérieur ou égal à 1 minute, avantageusement supérieur ou égal à 3 minutes, avantageusement encore supérieur ou égal à 5 minutes, et le premier test est destiné à détecter lorsque la tension mesurée de la batterie en charge dépasse pour la première fois ladite tension cible.

Avantageusement, l'étape de pause comprend :
- une première pause, suivie d'une étape de mesure de la tension de la batterie et d'une étape de test intermédiaire pour vérifier si la tension mesurée après la première pause est supérieure ou égale à la tension cible, et
- une deuxième pause mise en oeuvre seulement si le test intermédiaire est positif,
et la durée de la première pause est inférieure à la durée de la deuxième pause.

Avantageusement encore, si le test intermédiaire est négatif, l'étape de charge est réitérée directement après la première pause.

Suite à la première pause, si la tension de la batterie passe en dessous de la tension cible, la charge est reprise. La charge n'est arrêtée qu'une fois que la tension de la batterie après la pause demeure supérieure ou égale à la tension cible.

La durée de la première pause est avantageusement inférieure ou égale à 2 minutes, avantageusement encore inférieure ou égale à 1 minute.

L'état de charge cible de la batterie peut être compris entre 30% et 85%, avantageusement entre 50% et 80%, avantageusement encore entre 65% et 75%. Grâce à cela, le vieillissement de la batterie est ralenti et sa durée de vie est donc augmentée.

Avantageusement encore, le procédé comprend une étape préalable de configuration lors de laquelle on détermine des données de corrélation entre l'état de charge de la batterie et la tension en circuit ouvert de la batterie. Cette étape de configuration peut être réalisée en laboratoire ou en usine, sur la batterie elle-même ou sur une batterie de référence identique.

La source d'alimentation est avantageusement agencée pour délivrer un courant variable. Elle peut comprend un dispositif de production d'énergie électrique intermittente.

La source d'alimentation peut être agencée pour générer un courant électrique de charge à partir d'une source d'énergie renouvelable. Elle peut comprend un module photovoltaïque.

L'invention concerne aussi un dispositif de pilotage de la charge d'une batterie d'accumulateurs électrochimiques, notamment une batterie lithium, à l'aide d'une source d'alimentation, destiné à charger ladite batterie jusqu'à un état de charge cible prédéfini, caractérisé en ce qu'il comprend :
- un élément pilotable de connexion et de déconnexion de la batterie à la source d'alimentation ;
- un capteur de mesure de la tension de la batterie ;
- un module de test de la tension mesurée reliée à une mémoire de stockage d'une tension cible égale à la tension en circuit ouvert de la batterie à un état de charge cible souhaité ;
- un module de commande destiné à commander l'élément pilotable de connexion et de déconnexion, le capteur de mesure de la tension et le module de test, le module de commande étant configuré pour mettre en oeuvre le procédé tel que précédemment défini.

L'invention concerne aussi un système comportant un élément à alimenter en énergie électrique, une batterie d'accumulateurs électrochimiques, notamment une batterie lithium, destinée à être chargée par connexion à une source d'alimentation externe et à alimenter en énergie électrique ledit élément, et un dispositif de pilotage de la charge de la batterie tel que défini ci-dessus.

Dans un mode de réalisation particulier, l'élément à alimenter en énergie électrique est un moteur d'entraînement d'un élément mobile de fermeture, d'occultation, de protection solaire ou d'écran.

L'invention concerne enfin une installation comprenant un élément mobile de fermeture, d'occultation, de protection solaire ou d'écran et le système défini ci-dessus. Dans une forme de réalisation particulière, l'installation comprend une source d'alimentation agencée pour générer un courant électrique de charge à partir d'une source d'énergie renouvelable, notamment un module photovoltaïque.

### Description sommaire des dessins

L'invention sera mieux comprise à l'aide de la description suivante du procédé de charge d'une batterie, d'un dispositif de pilotage de la charge d'une batterie et d'une installation intégrant une batterie et un tel dispositif de pilotage, selon différents variantes de réalisation de l'invention, en référence aux dessins annexés sur lesquels :
les figures 1A et 1B représentent des courbes de corrélation entre l'état de charge (SOC) et la tension en circuit ouvert de la batterie, respectivement pour différentes températures de la batterie et pour différents états de santé (SOH) de la batterie ;

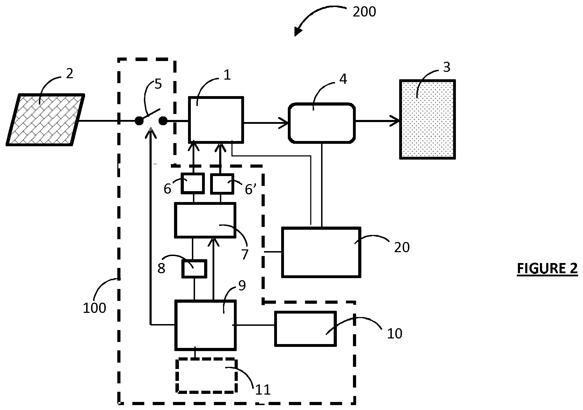

la figure 2 représente un schéma d'une installation intégrant la batterie ;
la figure 3 représente un organigramme du procédé de charge selon un premier mode de réalisation qui n'appartient pas à l'invention ;
la figure 4 représente l'évolution de la tension de la batterie lors d'une charge selon le procédé de la figure 3 ;
la figure 5 représente un organigramme du procédé de charge selon un mode de réalisation de l'invention ;
la figure 6 représente l'évolution de la tension de la batterie lors d'une charge selon le procédé de la figure 4.

### Description détaillée de modes de réalisation particuliers de l'invention

L'invention permet de charger une batterie d'accumulateurs électrochimiques 1, notamment une batterie lithium, jusqu'à un état de charge cible strictement inférieur à 100%, noté SOCcible. L'état de charge cible SOCcible est par exemple égal à 70%.

La batterie 1 est par exemple une batterie lithium-ion. Dans l'exemple de réalisation particulier décrit ici, elle est alimentée en énergie électrique par un module photovoltaïque 2. A titre d'exemple illustratif d'application, la batterie 1 peut équiper une installation 200 de type « volet solaire » qui récupère l'énergie solaire grâce au module photovoltaïque 2 placé par exemple sur le coffre du volet.

L'installation 200 comprend les éléments suivants :
- un volet roulant 3 ;
- un dispositif 4 d'actionnement du volet roulant 3, comportant un moteur d'entraînement en déplacement du volet roulant 3 ;
- la batterie lithium-ion 1 d'alimentation électrique du moteur ;
- le module photovoltaïque 2 ;
- un dispositif 100 de pilotage de la charge de la batterie 1 ;
- une unité de commande 20.

L'invention pourrait s'appliquer à tout autre élément mobile de fermeture, d'occultation, de protection solaire ou d'écran, à la place du volet roulant.

La batterie 1 a pour rôle d'alimenter électriquement le moteur. En outre, ici elle a également pour rôle d'alimenter les différents éléments électriques de l'installation 200, notamment le dispositif de pilotage 100 et l'unité de commande 20. L'installation 200 est ainsi autonome sur le plan énergétique.

L'énergie électrique produite par le module photovoltaïque 2 à partir de l'énergie solaire récupérée permet de charger la batterie 1 à l'aide d'un courant électrique de charge qui est variable (c'est-à-dire qui varie dans le temps). Selon l'invention, la batterie est chargée par le module photovoltaïque 2 par la mise en oeuvre d'un procédé de charge, décrit plus loin, permettant de charger la batterie 1 jusqu'à un état de charge cible SOC0 prédéfini de façon simple et économique, sans ressources importantes de calculs et de mémoires.

L'unité de commande 20 de l'installation 200 est reliée aux différents éléments de l'installation et destinée à contrôler le fonctionnement de ces éléments. Elle comprend ici un microprocesseur. Elle a notamment pour rôle de commander le fonctionnement du moteur 4 d'entraînement du volet roulant 3 et le dispositif 100 de pilotage de la charge de la batterie 1.

Le dispositif de pilotage de la charge 100 comprend :
- un élément pilotable 5 de connexion et de déconnexion de la batterie 1 au module photovoltaïque 2, en l'espèce un interrupteur, interposé entre la batterie 1 et le module photovoltaïque 2 ;
- un capteur 6 de mesure de la tension de la batterie 1 ;
- ici un capteur 6' de mesure du courant entrant dans la batterie 1 ;
- un module de test 7, relié aux capteurs 6 et 6' et destiné à réaliser des tests sur la tension ou le courant mesurés par les capteurs ;
- une mémoire de stockage 8, stockant notamment une tension cible V0, reliée au module de test 7 ;
- un module de commande 9.

Le module de commande 9 est ici relié à l'unité centrale de commande 20. Dans l'exemple de réalisation particulier décrit ici, le module de commande 20 est un module logiciel comportant des instructions logicielles destinées à être exécutées par l'unité centrale de commande 20 afin de piloter la charge de la batterie selon le procédé de l'invention. En variante, le dispositif de pilotage 100 pourrait comprendre une unité de traitement, telle qu'un microprocesseur, distincte de l'unité de commande 20.

Le module de commande 9 a pour fonction de contrôler le fonctionnement de l'élément pilotable de connexion/déconnexion 5, du capteur de mesure de tension 6 et du module de test 7 de manière à mettre en oeuvre le procédé de charge de la batterie 1 de l'invention.

Le dispositif de pilotage 100 peut également comprendre une interface utilisateur 10 comportant des moyens logiciels et matériels permettant de saisir et de restituer des informations. Elle permet notamment à un utilisateur de saisir des instructions de charge (par exemple une instruction de charge manuelle ou une instruction de programmation de charges) ou d'autres données utiles pour la charge de la batterie (par exemple un état de charge cible de la batterie 1). Ces instructions et données sont ici enregistrées dans la mémoire de stockage 8.

L'ensemble comportant le moteur d'entraînement 4, la batterie d'alimentation 1, le dispositif 100 de pilotage de la charge de la batterie 1 et l'unité de commande 20 forme un système destiné à commander le volet roulant 3.

Le procédé de charge de la batterie 1 comprend une étape préalable de configuration CONFIG lors de laquelle des données de corrélation entre l'état de charge ou SOC de la batterie 1 et la tension en circuit ouvert VOC de la batterie 1 sont déterminées. Cette étape de configuration peut être réalisée en usine ou en laboratoire, préalablement à l'installation de la batterie 1 sur site. Elle peut être réalisée sur la batterie 1 elle-même ou sur une batterie de référence identique à la batterie 1.

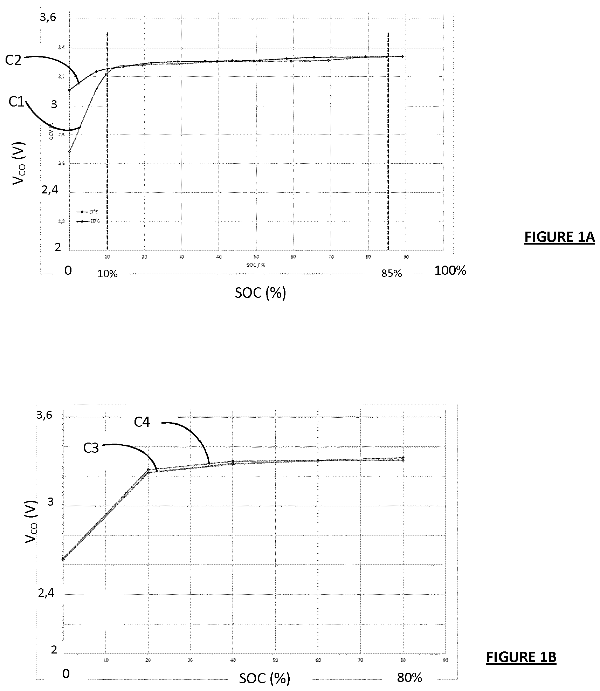

Les données de corrélation entre état de charge SOC et tension en circuit ouvert VOC de la batterie 1 peuvent être représentées par des courbes de corrélation. Sur la figure 1A, on a représenté deux courbes de corrélation C1, C2 obtenues pour deux températures différentes de la batterie, respectivement 25°C et 10°C. Il ressort de cette figure 1A que la corrélation entre la tension en circuit ouvert VOC de la batterie 1 et son état de charge SOC ne dépend pas de la température sur une large plage utile de SOC, ici comprise entre 10% et 85%. La corrélation entre la tension en circuit ouvert VOC de la batterie 1 et son état de charge SOC ne dépend pas non plus de l'état de santé ou SOH (de l'anglais « State Of Health ») de la batterie, comme cela ressort de la figure 1B sur laquelle on a représenté deux courbes de corrélation entre la tension en circuit ouvert VOC de la batterie 1 et son état de charge SOC, notées C3 et C4, correspondant à deux SOH de la batterie respectivement égaux à 76% et 100%.

Pour obtenir ces données de corrélation, une méthode particulière consiste à charger initialement la batterie 1, de préférence jusqu'à un état de charge de 100%. Une fois la batterie chargée, on la décharge de façon progressive par une succession d'opérations de décharge, espacées par des pauses durant lesquelles la batterie est non connectée et au repos (sans décharge ou charge), et la tension de la batterie diminue et se stabilise du fait d'un phénomène de relaxation au sein de la batterie. Lors de chaque opération de décharge, on mesure la quantité de charge électrique délivrée par la batterie, par exemple par une méthode de comptage coulométrique, afin d'évaluer le SOC de la batterie à la fin de l'opération de décharge. Les pauses de relaxation de la batterie doivent être d'une durée suffisante pour atteindre une relaxation complète ou quasi-complète de la batterie et ainsi obtenir une stabilisation de la tension en circuit ouvert de la batterie. Par exemple, chaque pause séparant deux opérations de décharge successives a une durée d'environ 2 heures. La durée des pauses pourrait toutefois être plus courte ou plus longue, selon le type de batterie. A l'issue de chaque pause entre deux décharges, la tension en circuit ouvert VOC de la batterie est mesurée à l'aide d'un capteur de mesure de tension. On obtient ainsi un ensemble de couples de valeurs associées ou correspondantes de SOC et de tension VOC de la batterie. Par extrapolation, on peut en déduire les données de corrélation entre le SOC et la tension VOC de la batterie sur toute la plage de SOC analysée, allant de préférence de 100% à 0%.

Les données de corrélation entre l'état de charge SOC et la tension en circuit ouvert VOC de la batterie 1 pourraient être fournies par le fabricant de la batterie.

Les données de corrélation entre l'état de charge SOC et la tension en circuit ouvert VOC de la batterie 1 peuvent être enregistrées dans une mémoire du dispositif de pilotage 100, ici dans la mémoire 8. En variante, seule la tension en circuit ouvert V0 associée à l'état de charge cible SOC0 est enregistrée dans la mémoire 8.

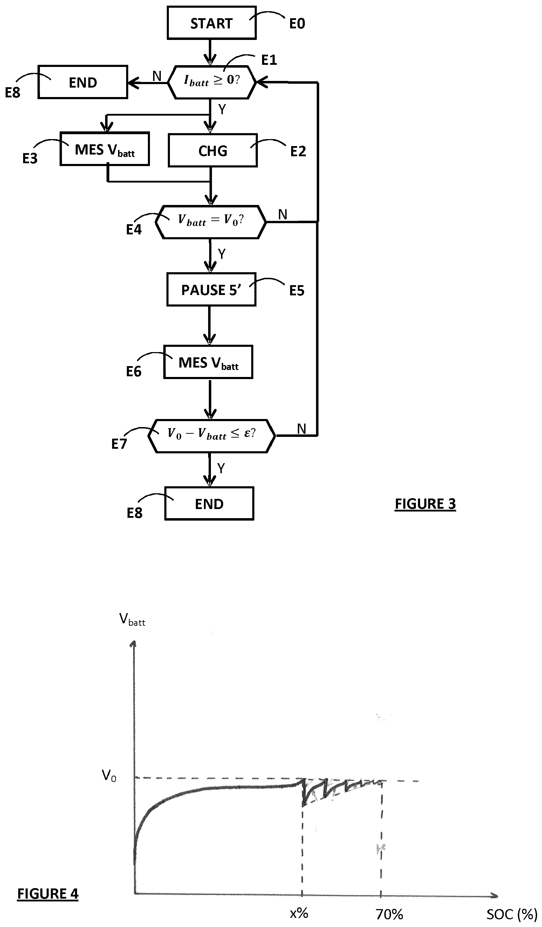

On va maintenant décrire, en référence à la figure 3, un premier mode de réalisation du procédé de charge de la batterie 1, en l'espèce une batterie de type lithium-ion. Le procédé de charge permet de charger la batterie 1 jusqu'à un état de charge cible prédéfini. Il est mis en oeuvre par le dispositif de pilotage de la charge 100, sous la commande du module de commande 9. Dans l'exemple de réalisation décrit ici, non limitatif, l'état de charge cible SOC0 est égal à 70%. Il est associé à la tension en circuit ouvert cible V0 dans les données de corrélation. On suppose qu'initialement, avant la mise en oeuvre du procédé de charge, l'état de charge de la batterie 1 est strictement inférieur à l'état de charge cible SOC0.

Lors d'une étape initiale E0, le module de commande 9 déclenche le démarrage du procédé de charge. La charge peut être programmée pour être déclenchée de façon automatique à une heure fixée, par exemple une fois par jour, à une heure programmée. Dans une première variante, elle pourrait être déclenchée sur détection d'un état de charge de la batterie 1 inférieur à un état de charge minimal fixé. Dans une deuxième variante, la charge est déclenchée de façon manuelle, sur commande spécifique d'un utilisateur au moyen de l'interface utilisateur 10.

Le procédé comprend ensuite une étape E1 de test ou de vérification de l'état de la batterie 1 (qui peut être dans un état de charge, de repos ou de décharge) afin de vérifier que la batterie 1 n'est pas en décharge. Par exemple, la batterie 1 est en décharge lorsqu'elle alimente électriquement le moteur 3 d'entraînement du volet pour l'enrouler ou le dérouler. Notons « Ibatt » le courant entrant dans la batterie 1. Il est mesuré par le capteur 6'. La vérification E1 consiste à vérifier si le courant Ibatt est nul (batterie au repos) ou supérieur à zéro (batterie en charge). Le test E1 est exécuté par le module de test E7, sur commande du module de commande 9.

Si le test d'état est négatif (branche N sur la figure 3), la batterie 1 étant en cours de décharge, le procédé de charge est immédiatement arrêté.

Si le test d'état est positif (branche Y sur la figure 3), la batterie 1 étant au repos ou en charge, le procédé se poursuit par une étape E2 de charge de la batterie 1. Lors de cette étape de charge E2, la batterie 1 est connectée à la source d'alimentation 2, en l'espèce le module photovoltaïque, par fermeture de l'interrupteur 5. La source 2 fournit à la batterie 1 un courant de charge Ibatt supérieur à zéro. Ce courant de charge varie dans le temps, en fonction de l'énergie solaire récupérée par le module photovoltaïque 2.

Durant l'étape de charge E2, le capteur de mesure de tension 6 mesure la tension Vbatt aux bornes de la batterie 1 en charge, lors d'une étape de mesure E3. Par définition, on appelle « première tension » la tension de la batterie 1 mesurée pendant la charge, la batterie étant sous courant de charge.

Parallèlement aux étapes de charge E2 et de mesure E3, sous la commande du module de commande 9, le module de test 7 exécute un premier test E4 destiné à détecter lorsque la tension mesurée Vbatt est égale ou sensiblement égale à une tension cible V0 prédéfinie, mémorisée dans la mémoire 8. Cette tension cible V0 est égale à la tension en circuit ouvert VOC de la batterie 1 lorsque l'état de charge de la batterie 1 est égal à l'état de charge cible SOC0 (ici 70%). Autrement dit, la tension cible V0 correspond à la tension associée à l'état de charge cible SOC0, ici de 70%, dans les données de corrélation précédemment déterminées.

L'étape E3 de mesure de la tension Vbatt est adaptée pour permettre de détecter lorsque la tension Vbatt de la batterie en charge atteint la tension cible V0. Par exemple, l'étape de mesure E3 comprend une succession de mesures réalisées avec une fréquence d'échantillonnage suffisamment élevée, avantageusement supérieure ou égale à un échantillon par minute.

Tant que le test E4 est négatif (branche N sur la figure 3), autrement dit tant que la tension Vbatt de la batterie 1 en charge est strictement inférieure à la tension cible V0, le procédé revient à l'étape de test E1 puis, en cas de test E1 positif, aux étapes de charge E2 et de mesure E3.

Si le test E4 est positif (branche Y sur la figure 3), autrement dit si la première tension Vbatt de la batterie 1 en charge est égale (ou sensiblement égale) à la tension cible V0, on déclenche une étape de pause E5. Autrement dit, la charge de la batterie 1 est mise en pause, momentanément interrompue. Durant cette étape de pause E5, la batterie 1 est déconnectée de la source d'alimentation 2, par ouverture de l'interrupteur 5, afin d'interrompre la charge et demeure au repos (c'est-à-dire ni en charge, ni en décharge) . La batterie 1 est alors en phase de relaxation, ce qui a pour effet d'abaisser sa tension Vbatt. La pause E5 a une durée dpause prédéfinie, par exemple égale à cinq minutes. Cette durée dpause est adaptée de sorte à ce que la tension de la batterie 1 en fin de pause soit proche de la tension finale de la batterie après relaxation complète. Par « proche » on entend signifier que l'écart entre la tension de la batterie en fin de pause et la tension finale après relaxation complète est inférieur ou égal à 10% de cette tension finale. Selon la batterie utilisée, la durée de la pause peut varier. Elle est généralement supérieure ou égale à trois minutes, avantageusement supérieure ou égale à cinq minutes. La durée maximale de pause dpause peut avantageusement être de 20 minutes, de préférence 15 minutes et encore avantageusement de 10 minutes. Cela permet de limiter la durée globale du procédé de charge. Toutefois, la durée de pause pourrait être supérieure aux valeurs maximales indiquées.

A l'issue de l'étape de pause E5, la tension de la batterie Vbatt est mesurée par le capteur 6, lors d'une étape de mesure E6, sous la commande du module de commande 9.

Le procédé comprend ensuite une deuxième étape de test E7 consistant à vérifier si la tension de la batterie Vbatt mesurée après la pause E5, autrement dit de la batterie relaxée, satisfait un critère de fin de charge relatif à la tension cible V0. Dans le premier mode de réalisation décrit ici, le critère de fin de charge est que l'écart entre la tension cible V0 et la tension mesurée Vbatt après la pause E5 doit être inférieur ou égal à un écart limite prédéfini ε. Autrement dit, le critère de fin de charge est satisfait (test E7 positif), si l'écart entre la tension cible V0 et la deuxième tension mesurée Vbatt est inférieur ou égal à l'écart limite ε.

L'écart limite ε est de préférence inférieur ou égal à 10% de la tension cible V0, avantageusement encore inférieure ou égal à 5%.

Si le test E7 est positif (branche Y sur la figure 3), autrement dit si l'écart entre la tension cible V0 et la tension Vbatt mesurée après la pause E5 est inférieur ou égal à l'écart limite ε, le procédé de charge est arrêté (étape E8 d'arrêt de la charge) sous la commande du module de commande 9.

Si le test E7 est négatif (branche N sur la figure 3), autrement dit si l'écart entre la tension cible V0 et la deuxième tension Vbatt mesurée après la pause E5 est strictement supérieur à l'écart limite ε, le procédé de charge revient à l'étape de test d'état E1, sous la commande du module de commande 9, le test d'état E1 étant suivi, s'il est positif, par les étapes suivantes E2 à E7 précédemment décrites. Les étapes E1 à E7 sont ainsi réitérées jusqu'à ce que le critère de fin de charge (écart entre la tension cible V0 et la deuxième tension mesurée Vbatt2 inférieur ou égal à l'écart limite ε) soit satisfait.

Sur la figure 4, on a représenté de façon simplifiée, l'évolution de la tension Vbatt de la batterie 1 pendant le procédé de charge qui vient d'être décrit, selon un exemple de mise en oeuvre. Autrement dit, la figure 4 représente le profil de charge de la batterie 1 lors de la mise en oeuvre du procédé de charge de l'invention selon le premier mode de réalisation décrit. Durant une première phase de charge, la tension Vbatt de la batterie 1 augmente de façon continue jusqu'à atteindre la tension cible V0. Puis, une fois la tension cible V0 atteinte, durant une deuxième phase de charge, la tension Vbatt de la batterie 1 oscille, par la mise en oeuvre d'une succession de charges et de pauses alternées, de la façon suivante : à chaque oscillation, la tension en augmente jusqu'à la tension cible V0, lors d'une opération de charge E2, puis diminue légèrement, lors d'une pause E5. Au fur et à mesure de la charge, la tension diminuée après chaque pause E5 se rapproche progressivement de la tension cible V0. La charge est arrêtée lorsque la tension de la batterie diminuée après une pause est proche de la tension cible V0, l'écart entre ces deux tensions étant inférieur à ε.

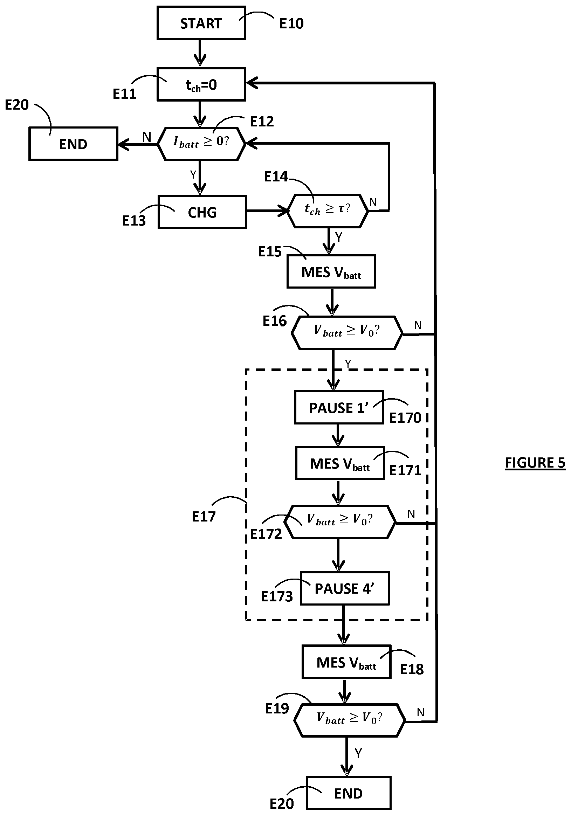

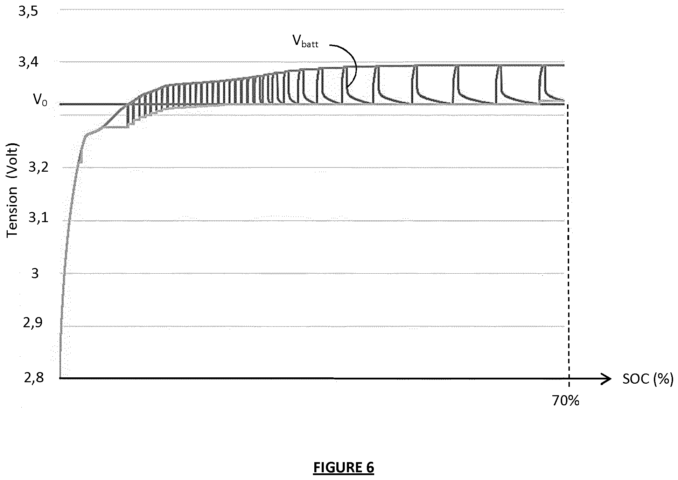

On va maintenant décrire en référence aux figures 5 et 6, le procédé de charge de la batterie 1 jusqu'à un état de charge cible prédéfini SOC0, associé à la tension en circuit ouvert cible V0, selon un deuxième mode de réalisation de l'invention. Il est mis en oeuvre par le dispositif de pilotage de la charge 100.

Dans l'exemple de réalisation décrit ici, non limitatif, le procédé de charge permet de charger la batterie 1 jusqu'à un état de charge cible SOC0 égal à 70%. On suppose qu'initialement, avant la mise en oeuvre du procédé de charge, l'état de charge de la batterie est strictement inférieur à l'état de charge cible SOC0.

Pour la mise en oeuvre de ce deuxième mode de réalisation du procédé de charge, le dispositif de pilotage 100 intègre un compteur de temps 11.

Lors d'une étape initiale E10, le dispositif de pilotage 100 commande le démarrage du procédé de charge. L'étape E10 est analogue à l'étape E0 précédemment décrite. Suite au démarrage de la charge, le dispositif de pilotage 100 déclenche un compteur de temps de charge tch lors d'une étape E11. Initialement, le temps de charge tch est nul (tch=0).

Le procédé comprend ensuite une étape E12 de test ou de vérification de l'état de la batterie 1, celle-ci pouvant être en charge, au repos ou en décharge, afin de vérifier que la batterie 1 n'est pas en cours de décharge. Le test E12 consiste à vérifier si le courant entrant dans la batterie 1, Ibatt, est nul (batterie au repos) ou supérieur à zéro (batterie en charge).

Si le test d'état E12 est négatif (branche N sur la figure 5), la batterie 1 étant en cours de décharge, le procédé de charge est immédiatement arrêté (étape E20).

Si le test d'état E12 est positif (branche Y sur la figure 5), la batterie 1 étant au repos ou en charge, le procédé se poursuit par une étape E13 de charge de la batterie 1. Lors de cette étape de charge E13, sous la commande du module de commande 9, l'interrupteur 5 est fermée et la batterie 1 est connectée à la source d'alimentation 2 (ici le module photovoltaïque) qui lui délivre un courant de charge Ibatt strictement supérieur à zéro. Ce courant de charge Ibatt de la batterie 1 varie dans le temps, en fonction de l'énergie solaire récupérée par le module photovoltaïque 2.

Durant l'étape de charge E13, on réalise une étape de test E14 sur le temps de charge afin de vérifier si le temps de charge tch a atteint une durée fixée τ. Cette durée τ correspond à la durée d'une période ou d'un intervalle de temps séparant deux mesures successives de la tension de la batterie 1. Par exemple, la durée τ est de l'ordre de quelques minutes, ici de 5 minutes. Autrement dit, le test E14 consiste à vérifier si tch ≥ τ.

Tant que le test E14 est négatif, autrement dit tant que le temps de charge tch reste inférieur à la durée τ de la période de mesure, le procédé revient à l'étape de test d'état E12 et la charge E13 est poursuivie tant que ce test d'état E12 est positif.

Si le test E14 est positif, autrement dit dès que le temps de charge tch est égal ou supérieur à la durée τ de la période de mesure, le module de commande 9 déclenche une mesure de la tension Vbatt de la batterie en charge par le capteur 6, lors d'une première étape de mesure E15.

Ainsi, la première étape E15 de mesure de la tension Vbatt de la batterie 1 en charge réalise des mesures espacées, séparées par un intervalle de temps fixé, prédéfini τ. Cet intervalle de temps est avantageusement supérieur ou égal à 1 minute, avantageusement encore supérieur ou égal à 3 minutes, de préférence supérieur ou égal à 5 minutes. Grâce à cela, on limite le nombre de mesures de la tension Vbatt.

L'étape de mesure E15 est suivie d'une première étape de test sur la tension E16. Le test E16 vise à détecter lorsque la tension Vbatt de la batterie mesurée lors de l'étape E15 dépasse pour la première fois la tension cible V0 prédéfinie. Pour rappel, la tension cible V0 est égale à la tension en circuit ouvert VOC de la batterie 1 lorsque l'état de charge de la batterie 1 est égal à l'état de charge cible (ici 70%).

Tant que le test E16 est négatif (branche N sur la figure 5), autrement dit tant que la tension mesurée Vbatt de la batterie 1 en charge est strictement inférieure à la tension cible V0, le procédé revient à l'étape E11, sous la commande du module de commande 9 : le temps de charge est remis à zéro, autrement dit tch=0, et le compteur de temps de charge est redémarré. Les étapes E11 à E16 sont ainsi réitérées tant que la tension mesurée Vbatt de la batterie 1 demeure inférieure à la tension cible V0.

Dès que le test E16 devient positif, autrement dit dès qu'il est détecté pour la première fois que la tension Vbatt de la batterie 1 en charge a atteint ou dépassé la tension cible V0, autrement dit est supérieure ou égale à la tension cible V0, le module de commande 9 déclenche une étape de pause E17 (branche Y sur la figure 5). Lors de la pause E17, la charge de la batterie 1 est momentanément interrompue. A cet effet, la batterie 1 est déconnectée de la source d'alimentation 2, ici par ouverture de l'interrupteur 5, sous la commande du module de commande 9. Durant la pause E17, la batterie 1 est au repos (c'est-à-dire ni en charge, ni en décharge) . La batterie 1 est alors en phase de relaxation, ce qui a pour effet d'abaisser la tension Vbatt.

La pause E17 a une durée totale dpause prédéfinie, par exemple égale à cinq minutes. Cette durée totale de pause dpause est adaptée de sorte à ce que la tension de la batterie 1 en fin de période de pause soit proche de la tension théorique finale de la batterie après une relaxation complète nécessitant une pause de plusieurs heures, autrement dit la tension que la batterie atteindrait théoriquement si elle était totalement relaxée. Par « proche » on entend signifier que l'écart entre la tension de la batterie en fin de pause et la tension finale après relaxation complète est inférieur ou égal à 10% de cette tension finale. Selon la batterie utilisée, la durée de la pause peut varier. Elle est généralement supérieure ou égale à trois minutes, avantageusement supérieure ou égale à cinq minutes. La durée maximale de pause dpause peut avantageusement être de 20 minutes, de préférence 15 minutes et encore avantageusement de 10 minutes. Cela permet de limiter la durée globale du procédé de charge.

Toutefois, la durée de pause pourrait être supérieure aux valeurs maximales indiquées.

Dans une variante de réalisation, représentée sur la figure 5, l'étape de pause E17 est scindée en deux pauses successives E170, E173. La première pause E170 est de courte durée. Sa durée d1 est inférieure à la durée d2 de la deuxième pause E173. Par exemple, la durée d1 de la première étape de pause est d'une minute et la durée d2 de la deuxième pause E173 est de quatre minutes. La durée d1 de la première pause est avantageusement inférieure ou égale à 2 minutes, avantageusement encore inférieure ou égale à 1 minute. La somme des durées respectives d1 et d2 des deux pauses E170 et E173 est égale à la durée de pause dpause fixée.

A la fin de la première pause E170, sous la commande du module de commande 9, la tension de la batterie Vbatt est mesurée lors d'une étape E171 par le capteur 6. Puis le module de test 7 exécute une étape de test intermédiaire E172 afin de vérifier si la tension mesurée Vbatt est toujours supérieure ou égale à la tension cible V0.

Si le test E172 est négatif (branche N sur la figure 5), autrement dit si la tension Vbatt est de nouveau inférieure à la tension cible V0 après la première pause E170, le procédé revient à l'étape E11, sous la commande du module de commande 9 : le temps de charge tch est remis à zéro, autrement dit tch=0, et le compteur de temps de charge est redémarré. Les étapes E12 et suivantes sont ensuite réitérées. Ainsi, si le test E172 est négatif, l'étape de charge E13 est réitérée directement après la première pause, c'est-à-dire sans mise en oeuvre de la deuxième pause.

Si le test E172 est positif (branche Y sur la figure 5), autrement dit si la tension Vbatt demeure supérieure à la tension cible V0 après la première pause E170, le dispositif de pilotage 100 met en oeuvre la deuxième étape de pause E173 d'une durée d2. La deuxième pause E173 n'est réalisée que si le test intermédiaire est positif, autrement dit seulement si la tension Vbatt après la première pause est toujours supérieure à la tension cible V0.

Cette variante de réalisation permet de réduire le temps total de pause durant la charge afin de bénéficier au maximum de l'énergie solaire durant la charge.

A la fin de la deuxième étape de pause E173, sous la commande du module de commande 9, la tension de la batterie Vbatt est mesurée par le capteur 6, lors d'une étape de mesure E18.

Comme précédemment indiqué, l'étape E17 pourrait ne comprendre qu'une seule pause de durée dpause.

Le procédé comprend ensuite une étape de test E19 consistant à vérifier si la tension Vbatt mesurée lors de l'étape E18, autrement dit la tension de la batterie après la pause E17, satisfait un critère de fin de charge. Cette étape est mise en oeuvre par le module de test 7, sous la commande du module de commande 9.

Dans le deuxième mode de réalisation décrit ici, le critère de fin de charge est que la tension Vbatt de la batterie 1 mesurée après la pause E17, et donc après relaxation, doit être supérieure ou égale à la tension cible V0. Autrement dit, le critère de fin de charge est satisfait (test E19 positif) si la tension Vbatt de la batterie 1 après la pause E17 est supérieure ou égale à la tension cible V0.

Si le test E19 est positif (branche Y sur la figure 5), autrement dit si la tension Vbatt de la batterie 1 après la pause E17 est supérieure ou égale à la tension cible V0, le procédé de charge est arrêté (étape E20 d'arrêt de la charge).

Si le test E19 est négatif (branche N sur la figure 5), autrement dit si la tension Vbatt de la batterie 1 après la pause E17 est inférieure à la tension cible V0, le procédé de charge repasse à l'étape E11, sous la commande du module de commande 9 : le temps de charge tch est remis à zéro, autrement dit tch=0, et le compteur de temps de charge est redémarré. Les étapes E12 et suivantes sont ensuite réitérées.

Sur la figure 6, on a représenté de façon simplifiée, l'évolution de la tension Vbatt de la batterie 1 pendant le procédé de charge qui vient d'être décrit en référence à la figure 5, selon un exemple de mise en oeuvre. Autrement dit, la figure 6 représente le profil de charge de la batterie 1 lors de la mise en oeuvre du procédé de charge de l'invention selon le deuxième mode de réalisation. Durant une première phase de charge, la tension Vbatt de la batterie 1 augmente de façon continue jusqu'à dépasser légèrement la tension cible V0. Puis, après dépassement de la tension cible V0, durant une deuxième phase de charge, la tension Vbatt de la batterie 1 oscille autour de la tension cible V0, par une succession d'opérations de charge séparées par des pauses. Durant cette deuxième phase, la tension Vbatt augmente et dépasse la tension cible V0, lors de chaque opération de charge, puis diminue lors de chaque pause en repassant au-dessous de la tension cible V0. La charge est arrêtée dès que la tension de la batterie diminuée après une pause demeure supérieure à la tension cible V0.

Dans la description qui précède, l'état de charge cible est de 70%. L'état de charge cible de la batterie pourrait être compris entre 30% et 85%, avantageusement encore entre 50% et 80%, avantageusement encore entre 65% et 75%.

L'invention peut s'appliquer à tout type de source d'alimentation. Elle trouve une application intéressante pour une source d'alimentation à courant variable mais pourrait également s'appliquer à une source d'alimentation à courant fixe.

La source d'alimentation n'est pas limitée à un module photovoltaïque. Elle pourrait utilisée tout autre source d'énergie renouvelable et être adaptée pour générer un courant électrique de charge à partir de cette source d'énergie renouvelable.

Dans la description qui précède, la batterie 1 est destinée à charger le moteur 4 d'entraînement d'un élément mobile de fermeture, d'occultation, de protection solaire ou d'écran. L'invention pourrait s'appliquer à tout autre élément à alimenter en énergie électrique à l'aide de la batterie 1, par exemple un parcmètre, un lampadaire ou autre mobilier urbain, ou bien encore un moteur de porte ou de fenêtre. L'invention concerne donc aussi un système comportant un élément à alimenter en énergie électrique, une batterie d'accumulateurs électrochimiques, notamment une batterie lithium, destinée à être chargée par connexion à une source d'alimentation externe et à alimenter en énergie électrique cet élément, et un dispositif de pilotage de la charge de la batterie tel que précédemment décrit. En outre, la présente invention peut s'appliquer à tout type de batterie, notamment aux batteries Lithium telles que les batteries Lithium-Ion, mais aussi aux batteries au plomb, NiMH.

## Revendications

1. Procédé de charge d'une batterie d'accumulateurs électrochimiques (1), notamment une batterie lithium, à l'aide d'une source d'alimentation (2), comprenant :
une étape (E13) de charge de la batterie (1) par connexion à la source d'alimentation (2) pendant un intervalle de temps fixé de durée supérieure ou égale à 1 minute ;
à l'issue dudit intervalle de temps, une première étape (E15) de mesure d'une tension (Vbatt) de la batterie (1) en charge ;
un premier test (E16) permettant de détecter si la tension mesurée (Vbatt) de la batterie (1) en charge lors de la première étape de mesure est égale ou supérieure à une tension cible (V0) qui est égale à une tension en circuit ouvert de la batterie à un état de charge cible souhaité (SOC0) ;
si le premier test est négatif, la reprise du procédé de charge à partir de l'étape de charge (E13) ;
si le premier test est positif, une étape de pause (E17), ayant une durée prédéfinie (dpause), durant laquelle la batterie (1) est déconnectée de la source d'alimentation (2) et au repos ;
une deuxième étape (E18) de mesure de la tension (Vbatt) de la batterie (1) en fin de pause ;
un deuxième test (E19) consistant à vérifier si la tension (Vbatt) de la batterie (1) mesurée en fin de pause satisfait un critère de fin de charge relatif à la tension cible ;
si le deuxième test (E19) est positif, l'arrêt du procédé de charge (E20) ; et
si le deuxième test (E7 ; E19) est négatif, la reprise du procédé de charge à partir de l'étape de charge (E13),
dans lequel l'étape de pause comprend :
une première pause (E170), suivie d'une étape de mesure (E171) de la tension de la batterie (Vbatt) et d'une étape de test intermédiaire (E172) pour vérifier si la tension mesurée après la première pause est supérieure ou égale à la tension cible, et
une deuxième pause (E173) mise en oeuvre seulement si le test intermédiaire est positif,
et dans lequel la durée de la première pause est inférieure à la durée de la deuxième pause.

2. Procédé selon la revendication 1, dans lequel, si le test intermédiaire (E172) est négatif, l'étape de charge (E13) est réitérée directement après la première pause (E170).

3. Procédé selon la revendication 1 ou 2, dans lequel la durée de la première pause (E170) est inférieure ou égale à 2 minutes, avantageusement encore inférieure ou égale à 1 minute.

4. Procédé selon l'une quelconque des revendications 1 à 3, dans lequel l'état de charge cible de la batterie est compris entre 30% et 85%, avantageusement entre 50% et 80%, avantageusement encore entre 65% et 75%.

5. Procédé selon l'une quelconque des revendications 1 à 4, comprenant en outre une étape préalable de configuration lors de laquelle on détermine des données de corrélation entre l'état de charge de la batterie et la tension en circuit ouvert de la batterie.

6. Procédé de charge selon l'une quelconque des revendications 1 à 5, dans lequel la source d'alimentation (2) est agencée pour délivrer un courant variable.

7. Procédé selon la revendication 6, dans lequel la source d'alimentation (2) est agencée pour générer un courant électrique de charge à partir d'une source d'énergie renouvelable.

8. Procédé selon la revendication 7, dans lequel la source d'alimentation (2) comprend un module photovoltaïque.

9. Procédé selon l'une quelconque des revendications 1 à 8, dans lequel la durée (dpause) de l'étape de pause (E17) est supérieure à trois minutes, avantageusement égale ou supérieure à cinq minutes.

10. Procédé selon l'une quelconque des revendications 1 à 9, dans lequel la durée (dpause) de l'étape de pause (E17) est inférieure ou égale à 20 minutes, de préférence inférieure ou égale à 15 minutes et encore avantageusement inférieure ou égale à 10 minutes.

11. Dispositif (100) de pilotage de la charge d'une batterie d'accumulateurs électrochimiques (1), notamment une batterie lithium, à l'aide d'une source d'alimentation (2), destiné à charger ladite batterie jusqu'à un état de charge cible prédéfini, comprenant :
un élément (5) pilotable de connexion et de déconnexion de la batterie à la source d'alimentation (2) ;
un capteur (6) de mesure de la tension de la batterie (1) ;
un module de test (7) de la tension mesurée reliée à une mémoire de stockage d'une tension cible égale à la tension en circuit ouvert de la batterie (1) à un état de charge cible souhaité ;
un module de commande (9) destiné à commander l'élément pilotable de connexion et de déconnexion, le capteur de mesure de la tension et le module de test, le module de commande étant configuré pour mettre en oeuvre un procédé selon l'une quelconque des revendications 1 à 10.

12. Système comportant un élément à alimenter en énergie électrique, une batterie d'accumulateurs électrochimiques, notamment une batterie lithium, destinée à être chargée par connexion à une source d'alimentation externe et à alimenter en énergie électrique ledit élément, et un dispositif de pilotage de la charge de la batterie selon la revendication 11.

13. Système selon la revendication 12, dans lequel l'élément à alimenter en énergie électrique est un moteur d'entraînement d'un élément mobile de fermeture, d'occultation, de protection solaire ou d'écran.

14. Installation comprenant un élément mobile de fermeture, d'occultation, de protection solaire ou d'écran et le système selon la revendication 13.

15. Installation selon la revendication 14, comprenant une source d'alimentation agencée pour générer un courant électrique de charge à partir d'une source d'énergie renouvelable, notamment un module photovoltaïque.

## Patentansprüche

1. Verfahren zum Laden einer Batterie von elektrochemischen Akkumulatoren (1), insbesondere einer Lithiumbatterie, mittels einer Leistungsquelle (2) welches Folgendes aufweist:
einen Schritt (E13) des Ladens der Batterie (1) durch Verbindung mit der Leistungsquelle (2) für ein bestimmtes Zeitintervall, welches eine Dauer von größer oder gleich 1 Minute hat;
am Ende des Zeitintervalls, einen ersten Schritt (E15) des Messens einer Spannung (Vbatt) der Batterie (1) im Lademodus;
einen ersten Test (E16), der es ermöglicht zu detektieren, ob die gemessene Spannung (Vbatt) der Batterie (1) im Lademodus während des ersten Messungsschrittes gleich oder größer einer Zielspannung (V0) ist, die gleich einer Spannung bei offener Schaltung der Batterie in einem erwünschen Zielzustand der Ladung (SOCO) ist;
wenn der erste Test negativ ist, erneutes Aufnehmen des Ladevorgangs vom Ladeschritt (E13);
wenn der erste Test positiv ist, einen Pausenschritt (E17), von vordefinierter Dauer (dpause), während dem die Batterie (1) von der Leistungsquelle (2) getrennt und im Leerlaufzustand ist;
einen zweiten Schritt (E18) des Messens der Spannung (Vbatt) der Batterie (1) am Ende der Pause;
einen zweiten Test (E19), der aufweist, zu überprüfen, ob die Spannung (Vbatt) der Batterie (1), die am Ende der Pause gemessen wird, ein Ladungsendekriterium relativ zur Zielspannung erfüllt;
wenn der zweite Test (E19) positiv ist, Stoppen des Ladevorgangs (E20); und
wenn der zweite Test (E7; E19) negativ ist, erneutes Aufnehmen des Ladevorgangs vom Ladeschritt (E13),
wobei der Pausenschritt Folgendes aufweist:
eine erste Pause (E170), gefolgt durch einen Schritt (E171) des Messens der Batteriespannung (Vbatt) und durch einen Zwischentestschritt (E172), um zu überprüfen, ob die Spannung, die nach der ersten Pause gemessen wird, größer oder gleich der Zielspannung ist, und
eine zweite Pause (E173), die nur eingerichtet wird, wenn der Zwischentest positiv ist,
und wobei, die Dauer der ersten Pause kürzer als die Dauer der zweite Pause ist.

2. Verfahren nach Anspruch 1, wobei, wenn der Zwischenschritt (E172) negativ ist, der Ladeschritt (E13) direkt nach der ersten Pause (E170) wiederholt wird.

3. Verfahren nach Anspruch 1 oder 2, wobei die Dauer der ersten Pause (E170) kleiner oder gleich 2 Minuten ist, vorteilhafterweise kleiner oder gleich 1 Minute.

4. Verfahren nach einem der Ansprüche 1 bis 3, wobei der Zielzustand der Ladung der Batterie, im Bereich von 30% bis 85% ist, vorteilhafterweise von 50% bis 80%, insbesondere vorteilhafterweise von 65% bis 75%.

5. Verfahren nach einem der Ansprüche 1 bis 4, welches weiter einen Vorkonfigurationsschritt aufweist, während dem Daten einer Korrelation zwischen dem Zustand der Ladung der Batterie und der Spannung bei offener Schaltung der Batterie bestimmt werden.

6. Ladeverfahren nach einem der Ansprüche 1 bis 5, wobei die Leistungsquelle (2) ausgebildet ist, um einen variablen Strom zu liefern.

7. Verfahren nach Anspruch 6, wobei die Leistungsquelle (2) ausgebildet ist, um einen elektrischen Ladestrom von einer erneuerbaren Energiequelle zu erzeugen.

8. Verfahren nach Anspruch 7, wobei die Leistungsquelle (2) eine Photovoltaikeinheit aufweist.

9. Verfahren nach einem der Ansprüche 1 bis 8, wobei die Dauer (dpause) des Pausenschrittes (E17) größer als 3 Minuten ist, vorteilhafterweise gleich oder größer als 5 Minuten.

10. Verfahren nach einem der Ansprüche 1 bis 9, wobei die Dauer (dpause) des Pausenschrittes (E17) kleiner oder gleich 20 Minuten ist, vorzugsweise kleiner oder gleich 15 Minuten und insbesondere vorteilhafterweise kleiner oder gleich 10 Minuten.

11. Vorrichtung (100) zum Treiben der Ladung einer Batterie von elektrochemischen Akkumulatoren (1), insbesondere einer Lithiumbatterie, mittels einer Leistungsquelle (2), die vorgesehen ist, um die Batterie auf einen vordefinierten Zielladungszustand zu laden, welche Folgendes aufweist:
ein antreibbares Element (5) zur Verbindung und Trennung der Batterie mit bzw. von der Leistungsquelle (2);
einen Sensor (6) zur Messung der Spannung der Batterie (1);
eine Einheit (7) zum Testen der gemessenen Spannung, die mit einem Speicher zum Speichern einer Zielspannung gekoppelt ist, die gleich der Spannung bei offenem Schaltkreis der Batterie (1) auf einem erwünschen Zielladungszustand ist;
eine Steuereinheit (9), die vorgesehen ist, um das antreibbare Verbindungs- und Trennungselement, den Spannungsmessungssensor und die Testeinheit zu steuern, wobei die Steuereinheit konfiguriert ist, um das Verfahren nach einem der Ansprüche 1 bis 10 auszuführen.

12. System, welches ein Element aufweist, welches mit elektrischer Energie versorgt werden soll, weiter eine Batterie von elektrochemischen Akkumulatoren, insbesondere eine Lithiumbatterie, die vorgesehen ist, um durch Verbindung mit einer externen Leistungsquelle geladen zu werden und das Element mit elektrischer Energie zu versorgen, und die Batterieladevorrichtung nach Anspruch 11.

13. System nach Anspruch 12, wobei das mit elektrischer Energie zu versorgende Element ein Antriebsmotor eines bewegbaren Schließ-, Beschattungs-, Sonnenschutz- oder Abschirmungselementes ist.

14. Baugruppe, die ein mobiles Schließ-, Abschattungs-, Sonnenschutz- oder Abschirmungselement und das System nach Anspruch 13 aufweist.

15. Baugruppe nach Anspruch 14, die eine Leistungsquelle aufweist, die ausgebildet ist, um einen elektrischen Ladestrom von einer Quelle für erneuerbare Energie zu erzeugen, insbesondere eine Photovoltaikeinheit.

## Claims

1. A method of charging a battery of electrochemical accumulators (1), particularly a lithium battery, by means of a power source (2), comprising:
a step (E13) of charging the battery (1) by connection to the power source (2) for a determined time interval having a duration longer than or equal to 1 minute;
at the end of said time interval, a first step (E15) of measuring a voltage (Vbatt) of the battery (1) in charge mode;
a first test (E16) enabling to detect whether the measured voltage (Vbatt) of the battery (1) in charge mode during the first measurement step is equal to or greater than a target voltage (V0) which is equal to an open-circuit voltage of the battery at a desired target state of charge (SOCO);
if the first test is negative, resuming the charge process from the charge step (E13);
if the first test is positive, a pause step (E17), having a predefined duration (dpause), during which the battery (1) is disconnected from the power source (2) and in the idle state;
a second step (E18) of measuring the voltage (Vbatt) of the battery (1) at the end of the pause;
a second test (E19) comprising verifying whether the voltage (Vbatt) of the battery (1) measured at the end of the pause meets an end-of-charge criterion relative to the target voltage;
if the second test (E19) is positive, stopping the charge process (E20); and
if the second test (E7; E19) is negative, resuming the charge process from the charge step (E13),
wherein the pause step comprises:
a first pause (E170), followed by a step (E171) of measuring the battery voltage (Vbatt) and by an intermediate test step (E172) to verify whether the voltage measured after the first pause is greater than or equal to the target voltage, and
a second pause (E173) implemented only if the intermediate test is positive,
and wherein the duration of the first pause is shorter than the duration of the second pause.

2. The method of claim 1, wherein, if the intermediate step (E172) is negative, the charge step (E13) is repeated directly after the first pause (E170).

3. The method of claim 1 or 2, wherein the duration of the first pause (E170) is shorter than or equal to 2 minutes, more advantageously shorter than or equal to 1 minute.

4. The method of any of claims 1 to 3, wherein the target state of charge of the battery is in the range from 30% to 85%, advantageously from 50% to 80%, more advantageously from 65% to 75%.

5. The method of any of claims 1 to 4, further comprising a prior configuration step during which data of correlation between the state of charge of the battery and the open-circuit voltage of the battery are determined.

6. The charge method of any of claims 1 to 5, wherein the power source (2) is arranged to deliver a variable current.

7. The method of claim 6, wherein the power source (2) is arranged to generate an electric charge current from a renewable energy source.

8. The method of claim 7, wherein the power source (2) comprises a photovoltaic unit.

9. The method of any of claims 1 to 8, wherein the duration (dpause) of the pause step (E17) is longer than three minutes, advantageously equal to or longer than five minutes.

10. The method of any of claims 1 to 9, wherein the duration (dpause) of the pause step (E17) is shorter than or equal to 20 minutes, preferably shorter than or equal to 15 minutes and more advantageously shorter than or equal to 10 minutes.

11. A device (100) for driving the charge of a battery of electrochemical accumulators (1), particularly a lithium battery, by means of a power source (2), intended to charge said battery to a predefined target state of charge, comprising:
a drivable element (5) of connection and disconnection of the battery to the power source (2);
a sensor (6) for measuring the voltage of the battery (1);
a unit (7) for testing the measured voltage coupled to a memory for storing a target voltage equal to the open-circuit voltage of the battery (1) at a desired target state of charge;
a control unit (9) intended to control the drivable connection and disconnection element, the voltage measurement sensor and the test unit, the control unit being configured to implement the method of any of claims 1 to 10.

12. A system comprising an element to be powered with electrical energy, a battery of electrochemical accumulators, particularly a lithium battery, intended to be charged by connection to an external power source and to power said element with electrical energy, and the battery charge driving device of claim 11.

13. The system of claim 12, wherein the element to be powered with electrical energy is a driving motor of a mobile closing, screening, solar protection, or shielding element.

14. An installation comprising a mobile closing, screening, solar protection, or shielding element and the system of claim 13.

15. The installation of claim 14, comprising a power source arranged to generate an electric charge current from a renewable energy source, particularly a photovoltaic unit.
